# EUROPEAN PATENT SPECIFICATION

(11) **EP 2 050 516 B1**
(45) Date of publication and mention of the grant of the patent: **15.12.2010**
(21) Application number: 07425657.9
(22) Date of filing: 18.10.2007
(51) Int. Cl.: B08B 9/08, B29B 17/02

(54) **Machine and method for continuously washing containers made of plastic material, and removal of contaminants and labels from their surface**
Vorrichtung und Verfahren zum kontinuierlichen Waschen von Kunststoffbehältern, und Entfernen von Unreinheiten und Etiketten von deren Oberfläche
Dispositif et procédé pour le nettoyage en continu de conteneurs plastiques, ainsi que l'enlèvement de contaminants et d'étiquettes de leurs surfaces

(43) Date of publication of application: 22.04.2009
(73) Proprietor: Amut S.p.A., 28100 Novara (IT)
(72) Inventor: Teruggi, Piergiorgio, 28100 Novara (NO) (IT)
(74) Representative: Valentini, Giuliano

(56) References cited:
- DE-A1- 19 618 363
- JP-A- 57 159 612
- US-A- 3 162 204
- US-A- 4 041 963
- US-A- 4 209 344
- US-A- 5 566 890

## Description

### Field of the invention

The present invention concerns a machine for washing containers made of recyclable plastic, for example bottles for water, drinks or the like made of PET or other recyclable plastic materials. In particular, the present invention concerns a machine for the continuous washing of whole plastic containers or bottles and the removal of contaminants and/or plastic and paper labels from their surface.

### State of the art

Plastic containers having one or more recyclable parts generally undergo one or more washing steps before treatment for recovery of the required recyclable plastic materials.

In the case of bottles made of PET, the known art proposes at least one pre-washing step with a heated washing fluid, if necessary together with steam at a high temperature, to remove the waste materials consisting for example of any paper or plastic labels fixed to the bottles by means of adhesives or the like.

A known example relating to a machine for continuous washing and removal of contaminants and labels from the surface of PET bottles is described in the European patent no. EP-0237127 in the name of Stamicarbon.

This document discloses a machine in which the bottles are immersed in a liquid bath heated to temperatures above 70°C to cause melting of the glues and yielding of the PET, so as to facilitate the detachment of contaminants and plastic or paper labels, and separation of caps and any bottoms made of plastics other than PET.

Another example of a machine for pre-washing PET bottles and separating any contaminants and labels is described in the international patent application no. WO 99/55508 A1 in the name of the Applicant. The machine comprises a hollow rotating cylinder provided with a perforated lateral wall for continuous expulsion of the washing fluid, the contaminants and the labels separated from the bottles and, lastly, the single bottles. The machine also accepts bottles in the form of bales or groups and uses a washing liquid heated to a temperature of 90°C and, if necessary, steam at high temperature.

Other examples of such machines are disclosed in DE-A-196 18363, US-A-4041963, US-A-4209344 and US-A-5566890. PET bottles coated wholly or partly in PVC or PET shrink-wrap plastic sheaths or wrappers with coloured and/or printed surface have recently have been introduced onto the market. These new types of bottles, increasingly widespread, are a problem for the systems of known type which operate with a heated or high temperature washing fluid.

When heated, the shrink-wrap sheaths and wrappers tend to contract and therefore adhere more closely to the outer surface of the bottle.

If the sheaths or wrappers adhering to the bottles are not removed, the bottles themselves, although cleaned, could be discarded during the subsequent steps for automatic selection of the recyclable materials (e.g. PET) from the contaminating materials (e.g. PVC). The automatic selection is generally performed by optical systems which could interpret the bottles still covered in the sheaths as containers made of non-recyclable materials or containers that have not been thoroughly cleaned.

### Summary of the invention

The object of the present invention is to propose a machine and a method for washing plastic containers in general, and in particular bottles, and for removing any type of contaminant and/or label in a continuous manner.

A further object of the present invention is to propose a machine and a method of the type referred to above which permit reduction in the energy consumption necessary for removal of the contaminants and labels.

A further object of the present invention is to propose a machine of the type referred to above with more compact dimensions than those of the known art.

These objects are achieved by the present invention by means of a machine as claimed in claim 1 and a method as claimed in claim 18. Further characteristics of the machine and method according to the invention are described in the respective dependent claims.

According to a first aspect of the present invention, a machine is provided for the continuous washing of plastic containers and the removal of contaminants and labels from their surface, comprising: at least one fixed washing chamber having at least one inlet and one outlet for the containers; at least one agitator rotating inside the chamber and having a plurality of agitation blades; means for feeding a washing fluid into the chamber and means for expelling the washing fluid together with the contaminants and labels removed from the surface of the containers.

The machine advantageously comprises tearing means suitable for acting on the contaminants and labels adhering to the surface of the containers during their transit inside the chamber to facilitate detachment of the contaminants and labels from the surface of the containers.

The process is performed continuously, i.e. by continuously feeding the containers and the washing fluid. In the same way, the washing fluid is continuously expelled together with the contaminants and labels detached from the surface of the containers via at least one portion of perforated wall present in the washing chamber, and the clean containers without contaminants and labels are continuously extracted from the machine.

In the method according to the present invention it is particularly advantageous to maintain a high agitator speed, and therefore a high speed of the blades integral with it in rotation, to facilitate not only the action of the tearing means but also a high level of friction between the containers passing through the inside of the washing chamber.

In particular, the rotation speed of the agitator is maintained substantially constant and sufficiently high in order to guarantee that the tangential velocity of the end of the blades is higher than 2.5 m/s.

In this way, by exploiting the action of the tearing means and the high level of friction between the containers, effective removal of the contaminants and labels adhering to the surface of the containers is obtained, not only glued paper labels but also shrink-wrap plastic sheaths or wrappers, without excessively heating the washing fluid.

An aqueous solution at ambient temperature or in any case an aqueous solution that can be slightly heated to a temperature not exceeding approximately 45°C and which can include detergent products is preferably used as a washing fluid. Said temperatures can also be reached by the fluid operating in normal working conditions without the need to provide heating units for the fluid.

According to a possible embodiment of the present invention, the tearing means include a plurality of pointed elements protruding towards the inside of the washing chamber and distributed in one or more portions of the chamber walls. Further protruding pointed elements can also be arranged on one or more blades of the agitator.

In practice, the washing consists in elimination of the typical contaminants that are normally attached to the surface of the bottles, such as paper or plastic labels, the surface dirt and remains of the content of the bottles. In addition to the above-mentioned contaminants, the machine is also able to separate any extraneous particles present among the material to be treated, for example stones, glass, plastic and metal fragments.

With respect to the existing systems proposed for this purpose, the machine according to the invention is characterised by its capability to obtain the washing result using cold water, high friction and short material washing times, while the alternative methods use hot water and long washing times with a low level of friction. By reducing the time necessary for obtaining the required level of cleaning and separation of the contaminants and labels, it is also possible to produce the washing machine with more compact dimensions than the known machines.

In short, the most evident advantages of the present invention are:
- energy saving, as cold water is used instead of water heated to 90°C;
- possibility of detachment of the shrink-wrap labels, which with the known systems operating at high temperature tend to anchor even more firmly to the bottles and containers;
- reduction of overall dimensions, since with the high level of friction, the container washing time is 4-5 times shorter and, consequently, the machine can be produced with more compact dimensions.

### Brief description of the drawings

Further advantages and characteristics of the present invention will become more evident from the following description, provided for illustrative and non-limiting purposes, with particular reference to the accompanying schematic drawings in which:
- Figure 1 is a longitudinal section view of the washing machine according to a possible embodiment of the present invention;
- Figure 2 is an enlarged view illustrating a detail of the washing machine shown in Figure 1; and
- Figure 3 is a cross section view along the plane III-III of the washing machine shown in Figure 1.

The washing machine according to the present invention comprises essentially a fixed washing chamber 10 with cylindrical shape, and an agitator 20 rotated inside the washing chamber 10 around an axis coinciding with that of the cylindrical chamber 10.

The embodiment shown here is intended in particular for the treatment of PET bottles, but it is evident that the same principles of the present invention can be adopted for other types of containers, as for other recyclable plastic materials.

A plurality of agitation blades 22 are arranged on the agitator, positioned so as to facilitate transit of the containers into the washing chamber 10 from an inlet 12 to an outlet 14. The containers are fed continuously via a hopper 16 and continuously extracted from the chamber 10 by means of an auger 30.

The containers are preferably fed to the washing chamber 10 at a constant mass flow rate and preferably in singularised condition, although small groups of bottles are tolerated (for example up to a maximum of approximately ten bottles).

The aqueous solution necessary for the washing process is introduced into the washing chamber 10 by means of the nozzles 15 distributed along the walls of the washing chamber 10, preferably in correspondence of the upper portion of the chamber.

The aqueous solution is introduced into the washing chamber 10 at ambient temperature, or in any case at a temperature not exceeding 45°C. To improve the washing action, chemical detergents can be added to the process water, if necessary by means of appropriate metering pumps (not shown).

A fraction of the washing fluid can also be introduced via one or more nozzles 2 supplied at pressures higher than 80 bars, for example at a pressure of around 100 bars, to provide a vigorous hydraulic action for removal of the contaminants and labels, in addition to the mechanical action exerted by the blades 22. The high pressure nozzles 2 are preferably distributed on the walls of the chamber 10 immediately upstream of the outlet 14 of the containers, or in any case in the vicinity of the same, i.e. at a potential container accumulation point before they are extracted by means of the auger 30.

The friction action between the containers is developed by the blades 22 of the agitator 20 which rotate the bodies of the plastic containers. Rubbing of the containers against one another and against the washing chamber 10 produces the vigorous action necessary for quick washing.

The agitator is operated by an electric motor 24 driven by a control unit 26. The agitator is rotated at high speed and, in particular, at a speed such that the tangential velocity measured at the end of the blades is higher than 2.5 m/s.

To increase the friction and facilitate detachment of the labels, above all of the shrink-wrap type, in the inner part of the washing chamber 10 pointed elements 41 are applied, the protrusion of which can be regulated to optimise the operation.

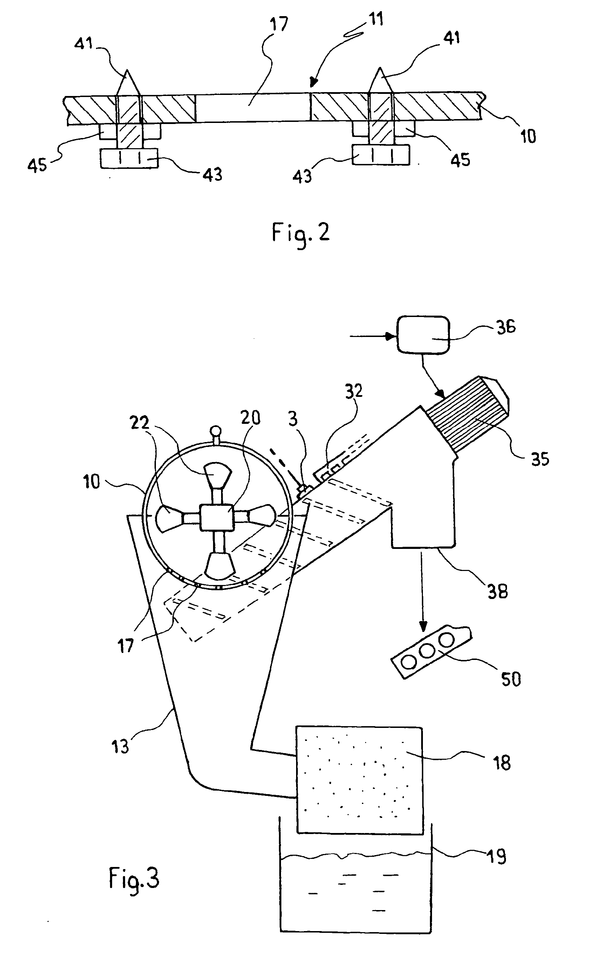

Figure 2 shows by way of example an embodiment in which the pointed elements 41 constitute the ends of screws 43 engaged in corresponding threaded holes obtained in the wall of the washing chamber 10. A nut 45 permits adjustment of the protrusion of the pointed elements 41 towards the internal space of the washing chamber 10. The pointed elements 41 can be arranged along certain portions of the walls of the cylindrical chamber, or on one or more blades 22 of the agitator 20.

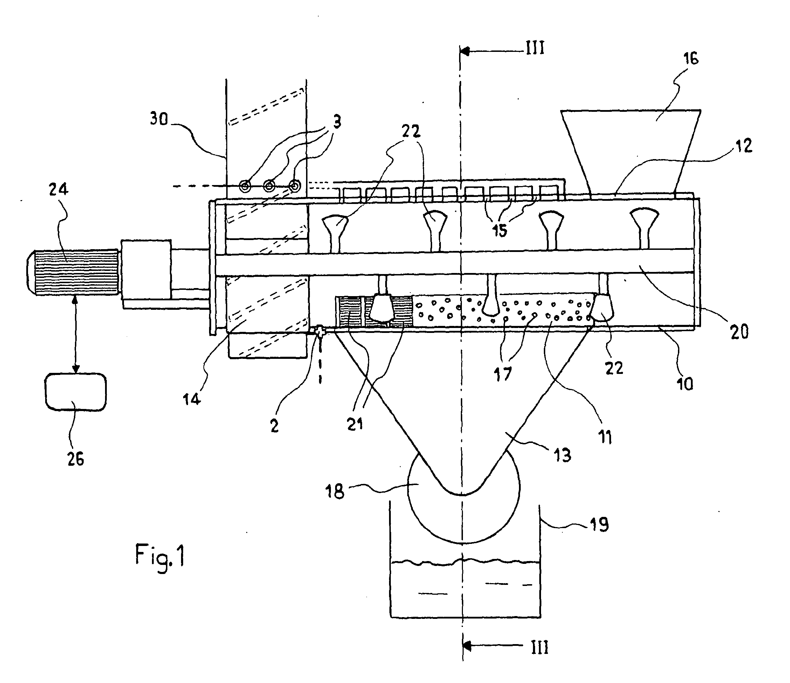

The view of Figure 2 shows a detail of a perforated portion 11 (Figures 1 and 3) in the lower part of the washing chamber 10. The perforated portion 11 includes drainage holes 17 with circular section having a suitable diameter (for example approximately 50 mm) for the drainage of solid contaminants such as stones, glass etc.

In addition to the portion 11 provided with circular holes, a perforated portion 21 (Figure 1) can also be provided having rectangular apertures delimited by a series of small cylindrical bars. These holes, or apertures, have dimensions (for example approximately 19 x 120 mm) such as to facilitate the passage of any plastic or paper labels already detached from the containers but with dimensions such that they cannot easily pass through the circular holes 17. The cylindrical form of the bars that delimit these apertures also facilitates expulsion of the labels and contaminants which assume a substantially flat shape once detached from the containers.

Via these circular and/or rectangular holes, the solid contaminants, the labels and the dirty aqueous solution are discharged and conveyed by a hopper 13 to a filter 18. The washing fluid separated from its solid particles is collected in a tank 19.

A fraction of the washing fluid present in the tank 19 can be withdrawn and mixed if necessary with a fraction of fresh fluid and re-introduced into the same washing chamber 10 via the nozzles 15 (Figure 1).

The view of Figure 3 highlights the system for extraction of the containers from the washing machine. In the continuous process carried out in the washing machine according to the present invention, due to the angle of the blades 22 of the agitator 20, the containers reach the outlet 14 where the auger 30, driven by an electric motor 35, provides for extraction of said containers.

To guarantee the material a constant stay time in the washing chamber 10 during the treatment phase, and therefore optimal filling of the chamber, the extraction auger 30 is equipped with a control unit 36.

The control unit 36 drives the motor 35 to automatically vary the extraction speed of the containers according to the current absorption measured on the motor 24 of the agitator 20. Due to this device it is possible to maintain the stay time of the containers substantially constant in the turbulent phase, so as to guarantee a constant washing result independently of the container flow rate at the machine inlet.

In other words, a certain value of the current absorbed by the motor 24 of the agitator 20 corresponds to a certain filling level of the washing chamber 10. Therefore, according to the settings of the control unit 36, the extraction auger 30 modulates its speed to maintain constant the effort required by the agitator 20. The result is that, while working continuously, it is possible to maintain the required filling level of the washing chamber 10 which determines the stay time of the containers during treatment in the chamber.

The renewal of at least part of the washing fluid necessary to maintain the level of contamination in the washing chamber 10 constant can also be performed by means of a shower 32 provided with nozzles directed onto the containers extracted by the auger 30. In this case the fluid comes from the stages downstream, in which the level of contamination of the recovered fluid is lower than that of the washing fluid in the chamber 10.

The containers extracted by means of the auger 30 pass through the outlet 38 of the same and are directed to subsequent treatment steps, for example to a further step of separation between the contaminants, including any remaining labels, and the containers performed by means of at least one ballistic screen 50.

The auger 30 can also be provided with high pressure nozzles 3, supplied at pressures above 80 bars (for example 100 bars). Also in this case, the high pressure nozzles 3 are arranged in a favourable position to exert a vigorous hydraulic action for removal of the contaminants and labels, i.e. in a position in which the containers have limited freedom of movement.

Both the nozzles 2 arranged on the chamber 10 and the nozzles 3 arranged on the auger 30 can be supplied with fresh fluid able to restore at least partly the overall fluid content constantly present in the chamber 10, leaving the nozzles 15, and also 32 if necessary, the job of restoring the fraction of filtered and purified fluid coming, for example, from the tank 19.

Various modifications can be made to the embodiments represented here without departing from the scope of the present invention. For example, the tearing means can have a different shape from the pointed elements 41 of the screws 43, and systems can be provided to simultaneously adjust the protrusion of all the pointed elements in one single operation, both on the walls of the chamber 10 and on the blades 22. In the same way, the control units 26 and 36, even if shown for the sake of clarity as separate units, can be integrated in one single main control unit which controls other functions of the machine or plant in which it is installed.

## Claims

1. A machine for the continuous washing of plastic containers and the removal of contaminants and labels from their surface, comprising:
- at least one fixed washing chamber (10) having at least one inlet (12) and one outlet (30) for said containers;
- at least one agitator (20) rotated inside said chamber (10) and having a plurality of agitation blades (22);
- means (15) for supplying a washing fluid inside said chamber;
- and means for expelling said washing fluid together with the contaminants and labels removed from the surface of said containers, **characterised by** comprising tearing means (17) suitable for acting on the contaminants and labels adhering to the surface of said containers during their transit inside said chamber to facilitate detachment of the contaminants and labels from the surface of said containers.

2. The machine as claimed in claim 1, wherein said tearing means include a plurality of pointed elements protruding towards the inside of said washing chamber and distributed in one or more portions of the walls of said chamber.

3. The machine as claimed in claim 1, wherein said tearing means include a plurality of pointed elements protruding from one or more blades of said agitator.

4. The machine as claimed in claim 2 or 3, wherein the protruding level of said pointed elements with respect to their fixing surface is adjustable.

5. The machine as claimed in claim 1, wherein said means for continuous expulsion of said washing fluid together with the contaminants and labels removed from the surface of said containers include at least one perforated portion of the walls of said washing chamber.

6. The machine as claimed in claim 5, wherein said at least one perforated portion includes circular section holes.

7. The machine as claimed in claim 5, wherein said at least one perforated portion includes holes with a substantially rectangular section.

8. The machine as claimed in claim 1, wherein said agitation blades are directed so as to facilitate the transit of said containers from said inlet to said outlet.

9. The machine as claimed in claim 1, wherein said means for supplying a washing fluid inside said chamber include a plurality of nozzles distributed along the walls of said chamber.

10. The machine as claimed in claim 1, wherein said means for supplying a washing fluid inside said chamber include at least one nozzle positioned on the wall of said chamber and supplied at a pressure greater than 80 bars.

11. The machine as claimed in claim 1, wherein said washing fluid consists of an aqueous solution kept at a temperature below 45°C.

12. The machine as claimed in claim 1, wherein said washing fluid consists of an aqueous solution which includes chemical detergent products.

13. The machine as claimed in claim 1, wherein an electric motor is provided to drive said agitator, and wherein control means are provided to rotate said agitator at a speed such as to obtain a tangential velocity, measured at the end of said blades, greater than 2.5 m/s.

14. The machine as claimed in claim 1, wherein an extraction auger is provided in correspondence of the outlet for said containers.

15. The machine as claimed in claim 14, wherein an electric motor is provided to drive said extraction auger, and wherein control means are provided to regulate the extraction speed of said containers from said washing chamber.

16. The machine as claimed in claim 14, wherein said means for supplying a washing fluid inside said chamber include a plurality of nozzles distributed on said extraction auger.

17. The machine as claimed in claim 14, wherein said means for supplying a washing fluid inside said chamber include at least one nozzle positioned on said extraction auger and supplied at a pressure greater than 80 bars.

18. A method for continuous washing of plastic containers and the removal of contaminants and labels from their surface, which includes the steps of:
- feeding said containers to a washing chamber via an inlet;
- rotating at least one agitator having a plurality of agitation blades inside said washing chamber;
- supplying a washing fluid inside said chamber;
- extracting said containers from said washing chamber via an outlet of said chamber; and
- expelling said washing fluid together with the contaminants and labels removed from the surface of said containers,
**characterised by** providing for the surface tearing of the contaminants and labels adhering to the surface of said containers during their transit inside said chamber to facilitate detachment of the contaminants and labels from the surface of said containers.

19. The method as claimed in claim 18, wherein the tearing is performed by a plurality of pointed elements protruding towards the inside of said washing chamber and distributed in one or more portions of the walls of said chamber.

20. The method as claimed in claim 18, wherein the tearing is performed by a plurality of pointed elements protruding from one or more blades of said agitator.

21. The method as claimed in claim 19 or 20, wherein the protruding level of said pointed elements with respect to their fixing surface is adjustable.

22. The method as claimed in claim 18, wherein said washing fluid is expelled in a continuous manner together with the contaminants and labels removed from the surface of said containers via a perforated portion of the walls of said washing chamber.

23. The method as claimed in claim 18, wherein said agitation blades are directed so as to facilitate the transit of said containers from said inlet to said outlet.

24. The method as claimed in claim 18, wherein said washing fluid is introduced into said chamber via a plurality of nozzles distributed along the walls of said chamber.

25. The method as claimed in claim 18, wherein said washing fluid is introduced into said chamber via at least one nozzle positioned on the wall of said chamber and supplied at a pressure greater than 80 bars.

26. The method as claimed in claim 18, wherein said washing fluid consists of an aqueous solution kept at a temperature below 45°C.

27. The method as claimed in claim 18, wherein said washing fluid consists of an aqueous solution which includes chemical detergent products.

28. The method as claimed in claim 18, wherein said agitator is driven by an electric motor, and wherein said agitator is rotated at a speed such as to obtain a tangential velocity, measured at the end of said blades, greater than 2.5 m/s.

29. The method as claimed in claim 18, wherein said containers are extracted from the washing chamber by means of an extraction auger positioned in correspondence of said outlet.

30. The method as claimed in claim 29, wherein said extraction auger is driven by an electric motor, and wherein the extraction speed of said containers from said washing chamber is regulated by suitable control means.

31. The method as claimed in claim 29, wherein said washing fluid is introduced into said chamber via a plurality of nozzles distributed on said extraction auger.

32. The method as claimed in claim 29, wherein said washing fluid is introduced into said chamber via at least one nozzle positioned on said extraction auger and supplied at a pressure greater than 80 bars.

33. The method as claimed in claim 18, wherein said containers are fed to the washing machine at a constant mass flow rate.

34. The method as claimed in claim 18, wherein said containers are fed to the washing machine in singularised condition.

35. The method as claimed in claim 18, wherein the washing fluid supplied to said machine includes a fraction of the fluid expelled after it has been at least filtered to separate the contaminants and the labels removed from the surface of said containers.

36. The method as claimed in claim 18, wherein said plastic containers include PET bottles.

## Patentansprüche

1. Vorrichtung zum kontinuierlichen Waschen von Kunststoffbehältern und
zum Ablösen von Verunreinigungen und Etiketten von deren Oberfläche, umfassend:
- wenigstens eine feste Waschkammer (10) mit wenigstens einem Einlass (12) und einem Auslass (30) für die Behälter;
- wenigstens einen innerhalb der Kammer (10) rotierenden Rührer (20) mit einer Vielzahl an Rührflügeln (22);
- Mittel (15) zum Bereitstellen von Waschflüssigkeit innerhalb der Kammer;
- und Mittel zum Ausleiten der Waschflüssigkeit zusammen mit den Verunreinigungen und Etiketten, die von der Oberfläche der Behälter entfernt worden sind,
**dadurch gekennzeichnet, dass** die Vorrichtung Mittel zum Zerreißen (17) umfasst, wobei die Mittel (17) geeignet sind, um auf die an der Oberfläche der Behälter anhaftenden Verunreinigungen und Etiketten während ihres Transports innerhalb der Kammer einzuwirken, um das Ablösen der Verunreinigungen und Etiketten von der Oberfläche der Behälter zu erleichtern.

2. Vorrichtung nach Anspruch 1, wobei die Mittel zum Zerreißen eine Vielzahl an zugespitzten Elementen umfassen, die sich in Richtung des Innenraumes der Waschkammer erstrecken und in einem oder mehreren Abschnitten der Kammerwände angeordnet sind.

3. Vorrichtung nach Anspruch 1, wobei die Mittel zum Zerreißen eine Vielzahl an zugespitzten Elementen umfassen, die sich von einem oder mehreren Flügeln des Rührers aus erstrecken.

4. Vorrichtung nach Anspruch 2 oder 3, wobei der Erstreckungsgrad der zugespitzten Elemente mit Bezug zur deren Befestigungsoberfläche einstellbar ist.

5. Vorrichtung nach Anspruch 1, wobei die Mittel zum kontinuierlichen Ausleiten der Waschflüssigkeit zusammen mit den Verunreinigungen und Etiketten, die von der Oberfläche der Behälter entfernt worden sind, wenigstens einen perforierten Abschnitt der Waschkammerwände umfassen.

6. Vorrichtung nach Anspruch 5, wobei der wenigstens eine perforierte Abschnitt kreisförmige Ausnehmungen umfasst.

7. Vorrichtung nach Anspruch 5, wobei der wenigstens eine perforierte Abschnitt Ausnehmungen mit einem im Wesentlichen rechteckigen Profil umfasst.

8. Vorrichtung nach Anspruch 1, wobei die Rührflügel so ausgerichtet sind, dass sie den Transport der Behälter von dem Einlass zu dem Auslass erleichtern.

9. Vorrichtung nach Anspruch 1, wobei die Mittel zum Bereitstellen der Waschflüssigkeit innerhalb der Kammer eine Vielzahl an Düsen umfassen, die verteilt entlang der Kammerwände angeordnet sind.

10. Vorrichtung nach Anspruch 1, wobei die Mittel zum Bereitstellen der Waschflüssigkeit innerhalb der Kammer wenigstens eine Düse umfassen, die an der Kammerwand angeordnet ist und einen Druck bereitstellt, der größer als 80 bar ist.

11. Vorrichtung nach Anspruch 1, wobei die Waschflüssigkeit aus einer wässrigen Lösung besteht, die unterhalb einer Temperatur von 45°C gehalten wird.

12. Vorrichtung nach Anspruch 1, wobei die Waschflüssigkeit aus einer wässrigen Lösung besteht, die chemische Reinigungsmittel umfasst.

13. Vorrichtung nach Anspruch 1, wobei zum Antreiben des Rührers ein elektrischer Motor vorgesehen ist und wobei Steuerungsmittel vorgesehen sind, um den Rührer mit einer solchen Geschwindigkeit rotieren zu lassen, dass eine Tangentialgeschwindigkeit erreicht wird, die, am Ende der Flügel gemessen, größer als 2,5 m/s ist.

14. Vorrichtung nach Anspruch 1, wobei eine Förderschnecke vorgesehen ist, die mit dem Auslass für die Behälter entsprechend zusammenwirkt.

15. Vorrichtung nach Anspruch 14, wobei zum Betrieb der Förderschnecke ein elektrischer Motor vorgesehen ist und zum Regulieren der Entnahmegeschwindigkeit der Behälter aus der Waschkammer Steuerungsmittel vorgesehen sind.

16. Vorrichtung nach Anspruch 14, wobei die Mittel zum Bereitstellen der Waschflüssigkeit innerhalb der Kammer eine Vielzahl an Düsen umfassen, die auf der Förderschnecke verteilt angeordnet sind.

17. Vorrichtung nach Anspruch 14, wobei die Mittel zum Bereitstellen der Waschflüssigkeit innerhalb der Kammer wenigstens eine Düse umfassen, die auf der Förderschnecke angeordnet ist und einen Druck von mehr als 80 bar bereitstellt.

18. Verfahren zum kontinuierlichen Waschen von Kunststoffbehältern und Ablösen von Verunreinigungen und Etiketten von deren Oberfläche, folgende Schritte umfassend:
- Zuführen der Behälter in die Waschkammer über einen Einlass;
- Drehen von wenigstens einem Rührer mit einer Vielzahl an Rührflügeln innerhalb der Waschkammer;
- bereitstellen einer Waschflüssigkeit innerhalb der Kammer;
- Entnehmen der Behälter aus der Waschkammer über einen Auslass der Kammer; und
- Ausleiten der Waschflüssigkeit zusammen mit den Verunreinigungen und Etiketten, die von der Oberfläche der Behälter entfernt worden sind, **gekennzeichnet dadurch, dass** ein Zerreißen der an der Oberfläche der Behälter während ihres Transports innerhalb der Kammer anhaftenden Verunreinigungen und Etiketten für die Oberflächen vorgesehen ist, um das Ablösen der Verunreinigungen und Etiketten von der Oberfläche der Behälter zu erleichtern.

19. Verfahren nach Anspruch 18, wobei das Zerreißen durch eine Vielzahl an zugespitzten Elementen erfolgt, die sich in Richtung des Innenraumes der Waschkammer erstrecken und in einem oder mehreren Abschnitten der Kammerwände angeordnet sind.

20. Verfahren nach Anspruch 18, wobei das Zerreißen durch eine Vielzahl an zugespitzten Elementen erfolgt, die sich von einem oder mehreren Flügeln des Rührers aus erstrecken.

21. Verfahren nach Anspruch 19 oder 20, wobei der Grad, in dem sich die zugespitzten Elemente von ihrer Befestigungsoberfläche aus erstrecken, einstellbar ist.

22. Verfahren nach Anspruch 18, wobei die Waschflüssigkeit kontinuierlich mit den Verunreinigungen und Etiketten von der Oberfläche der Behälter über einen perforierten Abschnitt der Waschkammerwände ausgeleitet wird.

23. Verfahren nach Anspruch 18, wobei die Rührflügel so ausgerichtet sind, dass sie den Transport der Behälter von dem Einlass zu dem Auslass erleichtern.

24. Verfahren nach Anspruch 18, wobei die Waschflüssigkeit über eine Vielzahl an Düsen, die entlang der Wände der Kammer angeordnet sind, in die Kammer eingeleitet wird.

25. Verfahren nach Anspruch 18, wobei die Waschflüssigkeit über wenigstens eine an der Kammerwand angeordnete Düse in die Kammer eingeleitet wird und mit einem Druck von mehr als 80 bar versorgt wird.

26. Verfahren nach Anspruch 18, wobei die Waschflüssigkeit aus einer wässrigen Lösung besteht, die bei einer Temperatur von weniger als 45°C gehalten wird.

27. Verfahren nach Anspruch 18, wobei die Waschflüssigkeit aus einer wässrigen Lösung besteht, die chemische Reinigungsmittel umfasst.

28. Verfahren nach Anspruch 18, wobei der Rührer über einen elektrischen Motor betrieben ist und der Rührer mit einer Geschwindigkeit gedreht wird, so dass eine an den Enden der Flügel gemessene Tangentialgeschwindigkeit erreicht wird, die größer als 2,5 m/s ist.

29. Verfahren nach Anspruch 18, wobei die Behälter mit Hilfe einer entsprechend zu dem Auslass angeordneten Förderschnecke aus der Waschkammer entfernt werden.

30. Verfahren nach Anspruch 29, wobei die Förderschnecke mit einem elektrischen Motor angetrieben wird und die Entnahmegeschwindigkeit der Behälter aus der Waschkammer durch geeignete Steuerungsmittel eingestellt wird.

31. Verfahren nach Anspruch 29, wobei die Waschflüssigkeit mit einer Vielzahl an Düsen, die auf der Förderschnecke angeordnet sind, in die Kammer eingeleitet wird.

32. Verfahren nach Anspruch 29, wobei die Waschflüssigkeit mit wenigstens einer auf der Förderschnecke angeordneten Düse in die Kammer eingeleitet und mit einem Druck von mehr als 80 bar bereitgestellt wird.

33. Verfahren nach Anspruch 18, wobei die Behälter mit einer konstanten Massendurchflussrate in die Waschvorrichtung eingeführt werden.

34. Verfahren nach Anspruch 18, wobei die Behälter einzeln in die Waschvorrichtung eingeführt werden.

35. Verfahren nach Anspruch 18, wobei die in der Waschvorrichtung bereitgestellte Waschflüssigkeit einen Bruchteil der ausgeleiteten Flüssigkeit umfasst, nachdem diese zum Abscheiden der Verunreinigungen und Etiketten, die von der Oberfläche der Behälter entfernt worden sind, zumindest gefiltert wurde.

36. Verfahren nach Anspruch 18, wobei die Kunststoffbehälter PET-Flaschen umfassen.

## Revendications

1. Machine pour le lavage continu des récipients en plastique et le retrait des contaminants et des étiquettes de leur surface, comprenant :
au moins une chambre de lavage fixe (10) ayant au moins une entrée (12) et une sortie (30) pour lesdits récipients ;
au moins un agitateur (20) entraîné en rotation à l'intérieur de ladite chambre (10) et ayant une pluralité de pales d'agitation (22) ;
des moyens (15) pour alimenter un fluide de lavage à l'intérieur de ladite chambre ;
et des moyens pour expulser ledit fluide de lavage conjointement aux contaminants et aux étiquettes retirés de la surface desdits récipients,
**caractérisée en ce qu'**elle comprend des moyens de déchirement (17) appropriés pour agir sur les contaminants et les étiquettes adhérant à la surface desdits récipients pendant leur transit à l'intérieur de ladite chambre afin de faciliter le détachement des contaminants et des étiquettes de la surface desdits récipients.

2. Machine selon la revendication 1, dans laquelle lesdits moyens de déchirement comprennent une pluralité d'éléments pointus faisant saillie vers l'intérieur de ladite chambre de lavage et répartis dans une ou plusieurs parties des parois de ladite chambre.

3. Machine selon la revendication 1, dans laquelle lesdits moyens de déchirement comprennent une pluralité d'éléments pointus faisant saillie d'une ou de plusieurs pales dudit agitateur.

4. Machine selon la revendication 2 ou 3, dans laquelle le niveau de saillie desdits éléments pointus par rapport à leur surface de fixation est ajustable.

5. Machine selon la revendication 1, dans laquelle lesdits moyens pour l'expulsion continue dudit fluide de lavage conjointement aux contaminants et aux étiquettes retirés de la surface desdits récipients comprennent au moins une partie perforée des parois de ladite chambre de lavage.

6. Machine selon la revendication 5, dans laquelle ladite au moins une partie perforée comprend des trous de section circulaire.

7. Machine selon la revendication 5, dans laquelle ladite au moins une partie perforée comprend des trous avec une section sensiblement rectangulaire.

8. Machine selon la revendication 1, dans laquelle lesdites pales d'agitation sont dirigées afin de faciliter le transit desdits récipients de ladite entrée à ladite sortie.

9. Machine selon la revendication 1, dans laquelle lesdits moyens pour alimenter un fluide de lavage à l'intérieur de ladite chambre comprennent une pluralité de buses réparties le long des parois de ladite chambre.

10. Machine selon la revendication 1, dans laquelle lesdits moyens pour alimenter un fluide de lavage à l'intérieur de ladite chambre comprennent au moins une buse positionnée sur la paroi de ladite chambre et alimentée à une pression supérieure à 80 bar.

11. Machine selon la revendication 1, dans laquelle ledit fluide de lavage se compose d'une solution aqueuse maintenue à une température inférieure à 45 °C.

12. Machine selon la revendication 1, dans laquelle ledit fluide de lavage se compose d'une solution aqueuse qui comprend des produits détergents chimiques.

13. Machine selon la revendication 1, dans laquelle un moteur électrique est prévu pour entraîner ledit agitateur, et dans lequel on prévoit des moyens de commande pour faire tourner ledit agitateur à une vitesse telle que l'on obtient une vélocité tangentielle mesurée à une extrémité desdites pales, supérieure à 2,5 m/s.

14. Machine selon la revendication 1, dans laquelle on prévoit une vis d'extraction sans fin en correspondance avec la sortie pour lesdits récipients.

15. Machine selon la revendication 14, dans laquelle un moteur électrique est prévu pour entraîner ladite vis d'extraction sans fin, et dans laquelle on prévoit des moyens de commande pour réguler la vitesse d'extraction desdits récipients de ladite chambre de lavage.

16. Machine selon la revendication 14, dans laquelle lesdits moyens pour alimenter un fluide de lavage à l'intérieur de ladite chambre comprennent une pluralité de buses réparties sur ladite vis d'extraction sans fin.

17. Machine selon la revendication 14, dans laquelle lesdits moyens pour alimenter un fluide de lavage à l'intérieur de ladite chambre comprennent au moins une buse positionnée sur ladite vis d'extraction sans fin et alimentée à une pression supérieure à 80 bar.

18. Procédé pour le lavage continu des récipients en plastique et le retrait des contaminants et des étiquettes de leur surface, qui comprend les étapes consistant à :
alimenter lesdits récipients dans une chambre de lavage par une entrée ;
faire tourner au moins un agitateur ayant une pluralité de pales d'agitation à l'intérieur de ladite chambre de lavage ;
alimenter un fluide de lavage à l'intérieur de ladite chambre ;
extraire lesdits récipients de ladite chambre de lavage par une sortie de ladite chambre ; et
expulser ledit fluide de lavage conjointement aux contaminants et aux étiquettes retirés de la surface desdits récipients,
**caractérisé par** l'étape consistant à prévoir pour la surface, le déchirement des contaminants et des étiquettes qui adhèrent sur la surface desdits récipients pendant leur transit à l'intérieur de ladite chambre pour faciliter le détachement des contaminants et des étiquettes de la surface desdits récipients.

19. Procédé selon la revendication 18, dans lequel l'étape de déchirement est réalisée par une pluralité d'éléments pointus faisant saillie vers l'intérieur de ladite chambre de lavage et répartis dans une ou plusieurs parties des parois de ladite chambre.

20. Procédé selon la revendication 18, dans lequel ladite étape de déchirement est réalisée par une pluralité d'éléments pointus faisant saillie d'une ou de plusieurs pales dudit agitateur.

21. Procédé selon la revendication 19 ou 20, dans lequel le niveau de saillie desdits éléments pointus par rapport à leur surface de fixation est ajustable.

22. Procédé selon la revendication 18, dans lequel ledit fluide de lavage est expulsé d'une manière continue conjointement aux contaminants et aux étiquettes retirés de la surface desdits récipients par une partie perforée des parois de ladite chambre de lavage.

23. Procédé selon la revendication 18, dans lequel lesdites pales d'agitation sont dirigées afin de faciliter le transit desdits récipients de ladite entrée à ladite sortie.

24. Procédé selon la revendication 18, dans lequel ledit fluide de lavage est introduit dans ladite chambre par une pluralité de buses réparties le long des parois de ladite chambre.

25. Procédé selon la revendication 18, dans lequel ledit fluide de lavage est introduit dans ladite chambre par au moins une buse positionnée sur la paroi de ladite chambre et alimentée à une pression supérieure à 80 bar.

26. Procédé selon la revendication 18, dans lequel ledit fluide de lavage se compose d'une solution aqueuse maintenue à une température inférieure à 45 °C.

27. Procédé selon la revendication 18, dans lequel ledit fluide de lavage se compose d'une solution aqueuse qui comprend des produits détergents chimiques.

28. Procédé selon la revendication 18, dans lequel ledit agitateur est entraîné par un moteur électrique, et dans lequel ledit agitateur est entraîné en rotation à une vitesse telle que l'on obtient une vélocité tangentielle, mesurée à l'extrémité desdites pales, supérieure à 2,5 m/s.

29. Procédé selon la revendication 18, dans lequel lesdits récipients sont extraits de la chambre de lavage au moyen d'une vis d'extraction sans fin positionnée en correspondance avec ladite sortie.

30. Procédé selon la revendication 29, dans lequel ladite vis d'extraction sans fin est entraînée par un moteur électrique, et dans lequel la vitesse d'extraction desdits récipients de ladite chambre de lavage est régulée par des moyens de commande appropriés.

31. Procédé selon la revendication 29, dans lequel ledit fluide de lavage est introduit dans ladite chambre par une pluralité de buses réparties sur ladite vis d'extraction sans fin.

32. Procédé selon la revendication 29, dans lequel ledit fluide de lavage est introduit dans ladite chambre par au moins une buse positionnée sur ladite vis d'extraction sans fin et alimentée à une pression supérieure à 80 bar.

33. Procédé selon la revendication 18, dans lequel lesdits récipients sont alimentés dans la machine de lavage à un débit massique constant.

34. Procédé selon la revendication 18, dans lequel lesdits récipients sont alimentés dans la machine de lavage dans une condition individualisée.

35. Procédé selon la revendication 18, dans lequel le fluide de lavage alimenté dans ladite machine comprend une partie du fluide expulsé après qu'il a été au moins filtré pour séparer les contaminants et les étiquettes retirés de la surface desdits récipients.

36. Procédé selon la revendication 18, dans lequel lesdits récipients en plastique comprennent les bouteilles en PET.
